# EUROPEAN PATENT SPECIFICATION

(11) **EP 2 678 759 B1**
(45) Date of publication and mention of the grant of the patent: **22.10.2025**
(21) Application number: 12729707.5
(22) Date of filing: 21.02.2012
(51) Int. Cl.: G06F 3/01

(54) **HAPTIC SYSTEM AND DEVICE FOR MAN-MACHINE INTERACTION**
HAPTISCHES SYSTEM UND VORRICHTUNG FÜR MENSCH-MASCHINE-INTERAKTIONEN
SYSTÈME ET DISPOSITIF TACTILE POUR INTERACTION HOMME-MACHINE

(30) Priority: 21.02.2011 IT PI20110019
(43) Date of publication of application: 01.01.2014
(73) Proprietor: Humanware S.r.l., 56125 Pisa (IT)
(72) Inventor: SCOGLIO, Andrea, I-56125 Pisa (IT); CAPPIELLO, Giovanni, I-56122 Pisa (IT); CURTO, Zoran, I-56125 Pisa (IT); ROSSI, Andrea, I-56025 Pontedera Pisa (IT); AVIZZANO, Carlo Alberto, I-56127 Pisa (IT); SATLER, Massimo, I-55010 Lucca (IT); RUFFALDI, Emanuele, I-55019 Viareggio (IT)
(74) Representative: Celestino, Marco
(86) International application number: PCT/IB2012/050792
(87) International publication number: WO 2012/114274

(56) References cited:
- WO-A1-2010/038353
- FR-A1- 2 801 988
- JP-A- 2000 357 048
- JP-A- 2006 113 818
- US-B1- 7 780 573
- MASSIMO SATLER, CARLO ALBERTO AVIZZANO, EMANUELE RUFFALDI, GIOVANNI CAPPIELLO, ANDREA SCOGLIO, ZORAN CURTO, FREDERICO POSTERARO: "Control and sensor fusion of a mobile haptic interface fpr upper-limb rehabilitation", 16 December 2010 (2010-12-16), pages 1 - 31, XP002661647, Retrieved from the Internet <URL:http://www.mimos.it/chirurgiavirtuale10/07_Satler.pdf> [retrieved on 20111018]
- KORNYLAK CORPORATION: "Transwheel for multi-directional movement", 28 February 2010 (2010-02-28), XP055040623, Retrieved from the Internet <URL:http://www.kornylak.com/images/pdf/transwheel-brochure.pdf> [retrieved on 20121010]
- CARLO A AVIZZANO ET AL: "MOTORE: A mobile haptic interface for neuro-rehabilitation", RO-MAN, 2011 IEEE, IEEE, 31 July 2011 (2011-07-31), pages 383 - 388, XP032048261, ISBN: 978-1-4577-1571-6, DOI: 10.1109/ROMAN.2011.6005238
- MASSIMO SATLER ET AL: "Control of a desktop mobile haptic interface", WORLD HAPTICS CONFERENCE (WHC), 2011 IEEE, IEEE, 21 June 2011 (2011-06-21), pages 415 - 420, XP032008636, ISBN: 978-1-4577-0299-0, DOI: 10.1109/WHC.2011.5945522
- HIROYUKI KUDO, KOICHI SUZUMORI, TAKEFUMI KANDA: "Force Feedback Mouse with Differential Mechanism for Omni-Taveling", 18TH INTERNATIONAL SYMPOSIUM ON MICRO-NANOMECHATRONICS AND HUMAN SCIENCE 11-14 NOV. 2007 NAGOYA, JAPAN, 7 January 2008 (2008-01-07), IEEE Piscataway, NJ, USA, pages 430 - 435, XP002661648, ISBN: 978-1-4244-1857-2, Retrieved from the Internet <URL:http://ieeexplore.ieee.org/stamp/stamp.jsp?tp=&arnumber=4420894> [retrieved on 20111019]

## Description

### Field of the invention

The present invention relates to a haptic device that can operate as kinesthetic man-machine interface, i.e. transmitting forces or couples, for computer-generated virtual environments that can be used in systems of teleoperation, of virtual reality or augmented reality, in particular applicable to physiotherapy rehabilitation.

### Summary of the Prior art

Haptic devices are known that offer to a user an interaction capable of providing sensorial feedback. In particular, as haptic devices tactile devices are to be intended, capable of providing tactile sensations as such, such as weft, roughness, vibrations, temperature, etc., and kinesthetic haptic devices, capable of providing sensations of force and couple and then data relative to shape, weight, pliability of the materials, etc.

The haptic devices can also be classified either as exoskeletons, i.e. articulated wearable biomechatronic devices, whose interface is distributed along the whole limb of a user who wears it, and have a number of degrees of freedom at least equal to the number of degrees of freedom of the limb same, or as machines, i.e. devices whose interaction is carried out only through the final effector without necessarily involving all the degrees of freedom of the limb.

Both categories are presently structured through a plurality of stiff links and/or from tendons that create kinematical closed chains.

More in particular, the haptic devices working as kinesthetic interfaces are commonly used in the virtual field (virtual reality or augmented reality) or tele-operation (remote operation or master-slave systems). These applications comprise all the events and the situations that consider the interactions between a human and the outer world that is being simulated, normally with the aid of a computer, both for the purpose of exercise or training, for example flight simulators or guide simulators, both for a planning purpose, for example products or industrial processes like virtual mounting phases, and for other recreational, didactic or humanitarian purposes, such as games and interactive learning programs or systems for disabled persons, as well as for sophisticated applications of automation such as the remote control of a robot operating in inaccessible or hostile places to the user.

As a direct consequence of the above application these types of interfaces can be used as such as actual physiotherapy assistants in typical applications of medical therapies that pursue as an object the functional recovery from traumas, as in the case of the rehabilitative robotics. In particular, it is possible to administer neurological physiokinetic therapies, such as in cases of stroke or head traumas, in order to improve a patient's motor control, muscle or orthopaedic physiokinetic therapies, in order to increase the muscular force, the range of movement or improving the coordination.

In the known applications, devices are used that allow a user to grasp, more or less realistically, virtual objects generated by a computer, as if the user were interacting with a real object. In particular, in order to create for the user a sensation of being really immersed in the environment where the robot operates, giving, thus the possibility of engaging with the latter in a way as far as possible effective and realistic, it is necessary to use control strategies that go beyond the easy position control of the haptic interface. Control algorithms can be provided that take into account also the aspects of the interaction between the device and the virtual scene, i.e. controllers of position and force, for improving the realistic effect of the application. The strategies for controlling the interaction often use indirect force control, i.e. a control of the force without an explicit closure of a force feedback ring. In particular, with the control of yieldability or of impedance, or variable yieldability or variable compliance, a control of force is obtained by controlling the movement, i.e. an indirect force control, and then the closure explicit of a ring feedback of the force stiffness.

Control and sensor fusion of a mobile haptic interface for upper-limb rehabilitation is shown in XP002661647.

A robotic device used as a joystick with force feedback is disclosed in US 5, 929, 846.

Furthermore, a robotic exoskeleton device which can be used as interface is disclosed in PCT/IB02/05664, whereas a robotic planar haptic device operating as actuating machine with stiff links is disclosed in PI2004A000026. A further robotic device used for physiotherapy purposes is disclosed in US 5, 466, 213.

To this end, a haptic device exists that is movable on wheels as described in PI2006A000136. This device, despite achieving many of the above described objects, does not allow following a desired trajectory or path, i.e. omni-directional, since there are constraints due to the geometry of operation of the wheels.

### Summary of the Invention

It is a feature of the present invention to provide a haptic device that can follow any path or trajectory and that then it is omni-directional, in order to allow a continuous interaction and without kinematic singularity with a user, as well as to allow a continuous monitoring of the interaction same.

It is another feature of the present invention to provide a haptic device for aiding a user to follow the interaction movement during its activity of interaction, when such movement follows a predetermined operation direction.

It is still a feature of the present invention to provide a haptic device that does not require a support structure and/or a kinematical chain with stiff links and that is then of minimum encumbrance.

It is a further feature of the present invention to provide a haptic device that is light and easily portable as well as structurally easy to make.

It is a further feature of the present invention to provide a haptic system that implements said device.

The invention is defined in the independent claim.

Preferred embodiments are defined in the dependent claims.

These and other objects are achieved by a haptic device configured to be used as man-machine interface for interactions in virtual and/or real places, tele-operation and rehabilitation assisted by robot, comprising:
- a mobile unit configured to be interfaced with at least one user;
- a control unit associated with said mobile unit;
- a feeding unit arranged to feed said mobile unit;
- a detection means which is configured to determine in real time the position of said mobile unit in a workspace and to communicate with said control unit so that said mobile unit can be moved following a predetermined path;
wherein said mobile unit comprises:
at least three wheels rotationally spaced from each other;
wherein each of said wheels comprises a wheel motor unit,
a means for operating each wheel motor unit, in order to cause the rotation of each wheel about the respective rotation axis in a rotation plane orthogonal to said rotation axis;
wherein each wheel has, furthermore, a sliding means arranged to allow a free movement of said wheels in a direction transversal to said rotation support plane, such that said mobile unit can follow any trajectory according to a combination of the rotation movement imposed to each wheel by said wheel motor unit and of a free movement in a direction transversal to said rotation plane allowed by said sliding means.

The sliding means comprises a plurality of rollers arranged adjacent to each other on a same row. This way, it is possible to eliminate any wheel sliding in directions parallel to the axis of said wheel and arranged on a support plane of the mobile unit, and to reduce this sliding in any intermediate directions contained between a line parallel to the axis of the wheel and a line perpendicular to the axis of the wheel and arranged on the support plane.

In other words, each wheel can carry out a "leeway motion" transversally to each wheel rotation plane by the resulting rolling applied by the respective motor units to the other wheels, and owing to the free translation without friction allowed by the small rollers in a direction parallel to the axis of the wheel and orthogonal to the rotation plane of the wheel.

The rollers can be cylindrical or barrel-like.

In case of three wheels of the mobile unit, if the first wheel has not momentarily a rolling movement, and giving in this case to the other two wheels an identical rolling speed, a translation of the first wheel is obtained orthogonally to the wheel rotation plane i.e. parallel to its own rotation axis. Giving instead different speeds to the other two wheels, it is possible to obtain a movement in a direction oblique with respect to the rotation plane of the first wheel.

Then, controlling suitably the speed of the three or more wheels and taking into account their free translational capability in a direction transversal to their rotation support plane, the mobile unit can reach any point of a workspace with an extreme easiness. In the application concerning the rehabilitation assisted by robot, such a device, with respect to document described in PI2006A000136, allows the user to follow any trajectory on the basement.

In the invention, each wheel comprises two rows of rollers arranged on two parallel support planes and shifted from each other. The use of two rows of rollers shifted, with respect to a single row of rollers, allows the interface of being remarkably more comfortable, in fact, the phenomenon of chattering, i.e. of the vibrating due to the discontinuity when passing from a roller to other is remarkably low.

The mobile unit comprises a sensor means for detecting forces or couples applied by said user.

Advantageously, said sensor means for detecting the forces or couples is selected from the group consisting of:
- strain gauges with adjustable resistance, of metal or semiconductor type
- load cells;
- a means for measuring the induced deformation, of optical or magnetic or acoustic type;
- a means that computes the couple by sensing the current adsorbed by the motors.

The mobile unit is arranged to move in a basement having a predetermined area.

In particular, said mobile unit comprises a means for causing to said motor units to provide predetermined braking couples so that they are felt by a user as a feedback haptic force.

Preferably, said means for causing is programmed for providing forces and couples responsive to the position of the mobile unit in the support plane and responsive to the force applied by the user so that it can follow, by the device, predetermined trajectories.

In particular, said mobile unit is associated with a display means which is adapted to make an audio-visual feedback for said user of the movement on said basement.

The haptic device is adapted to be interfaced with the upper or lower limb of said user at any distal/proximal level or also only with the hand or with the fingers through an interface means, said interface means being selected from the group consisting of:
- at least one stiff and/or flexible handle;
- at least one stiff or flexible glove;
- a bracelet or a belt;
- a pen;
- finger end effector.

In particular, said wheels are chosen among toroidal wheels, tracks or balls.

The detection means is selected from the group consisting of:
- a means for measuring the absolute position by optically reading a two-dimensional code drawn on said basement;
- a means for measuring the absolute position, by triangulation with optical method;
- a means for measuring the absolute position, by triangulation with acoustic method;
- a means for measuring the absolute position, by triangulation with radiofrequency method;
- a means for measuring the absolute position with wired potentiometers or encoders.

In particular, said means for measuring the absolute position by optically reading a two-dimensional code drawn on said basement comprises an optical sensor integral to said mobile unit for reading an absolute position with respect to said basement.

Advantageously, a plurality of said haptic devices can be associated at the same time to said user. In particular, several haptic devices can be provided for each joint and/or on different limbs, or even for more users.

**In** particular, said passive device is adapted to measure the dynamic variables (forces, couples, and inertial data) and kinematical variables (positions, speed, accelerations, jerk), and quantities derived from them, during its interfacing steps with the user.

Advantageously, said haptic device can be integrated with a further haptic device both of tactile type, in order to configure the device to return to the user also tactile sensations, and of kinesthetic type, to configure the device for returning further force feedback on other articulations.

**In** particular, audio-visual systems can be implemented for example in the cognitive evaluation or rehabilitation of persons affected by neuro-psychiatric or neurological degenerative diseases.

In particular, said haptic device can be integrated with sensors capable of measuring physical quantities of biometric type heart rate monitor, sensor of humidity body, oximeter, etc.

Advantageously, next to a user's interface means, which is arranged to be held by the user, a support frame is provided for the wrist or forearm.

In particular, said mobile unit is made of two overlapped portions free of rotating with respect to each other, in such a way that the upper portion, comprising said interface means, remains always in an orientation mostly comfortable for the user.

Preferably, a means is provided for measuring the relative rotation of said two portions of the mobile unit.

Advantageously, a means is provided for measuring the forces applied by the user comprising a sensor of couple/force located in said interface means.

In particular, an antitilting ball is provided located in said mobile unit to limit the risks of tilting due to critical positions of the user's arm on the relative support.

Advantageously, passive rollers or balls or passive pivoting wheels along the wheel boundary are provided, in order to enlarge the support polygon of said mobile unit.

In particular, said mobile unit comprises two safety and support elements located symmetrically a support carter said mobile unit, for turning off quickly the mobile unit in case of danger for the user, that can be operated by the user same or by an assistant located in a position close to the user.

In particular, said interface means comprises a knob that has two slits that are symmetrical and parallel to the axis of the user's arm, that allow the movement of suitable buckles capable of blocking the hand of the user, limiting a possible sliding of the same in case the user is a person with high grasping difficulty and low mobility of the fingers of the hand.

Advantageously, said control unit comprises a program means that is arranged to track the position of said mobile unit using a specific algorithm of Kalman filter and to provide the force feedback to the user's handle responsive to the device for moving from the actual position of destination.

According to another aspect of the invention a haptic system comprises a haptic device as above described and a basement arranged to define a working area on which said haptic device moves.

In particular, the basement comprises a two-dimensional code on it reported, and the detection means comprises a means for measuring the absolute position by optically reading said two-dimensional code.

### Brief description of the drawings

The invention will be now shown with the description of an exemplary embodiment thereof, exemplifying but not limitative, with reference to the attached drawings, in which like reference characters designate the same or similar parts, throughout the figures of which:
- Fig. 1 shows a diagrammatical view of a haptic system comprising a haptic device that is arranged to work on a basement;
- Fig. 1A shows a perspective view of the haptic device of Fig. 1;
- Fig. 1B shows a diagrammatical functional view of the haptic device of Fig. 1A;
- Fig. 1C shows a possible two-dimensional reading code by means of optical sensors for detecting the absolute position of the mobile unit on the basement;
- Fig. 2 shows a cross sectional view of the haptic device that depicts the circumferential spacing between the wheels;

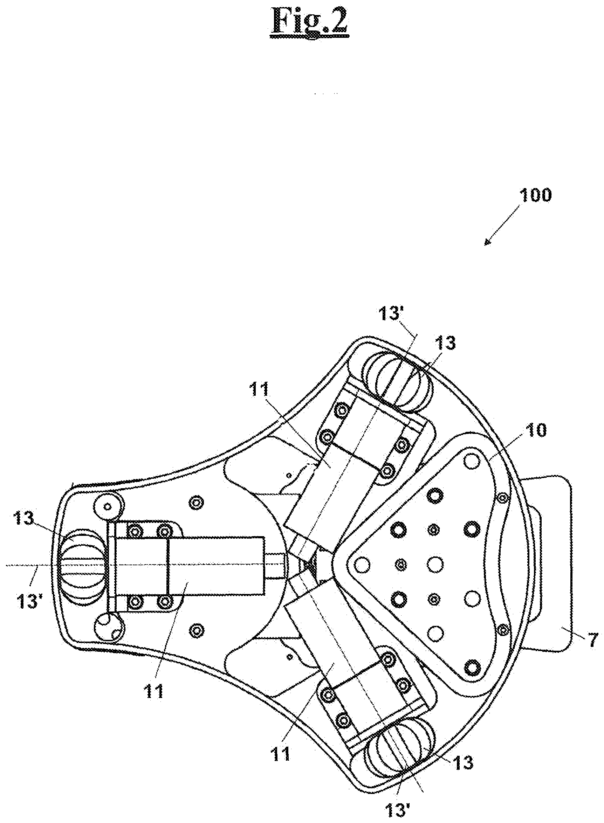

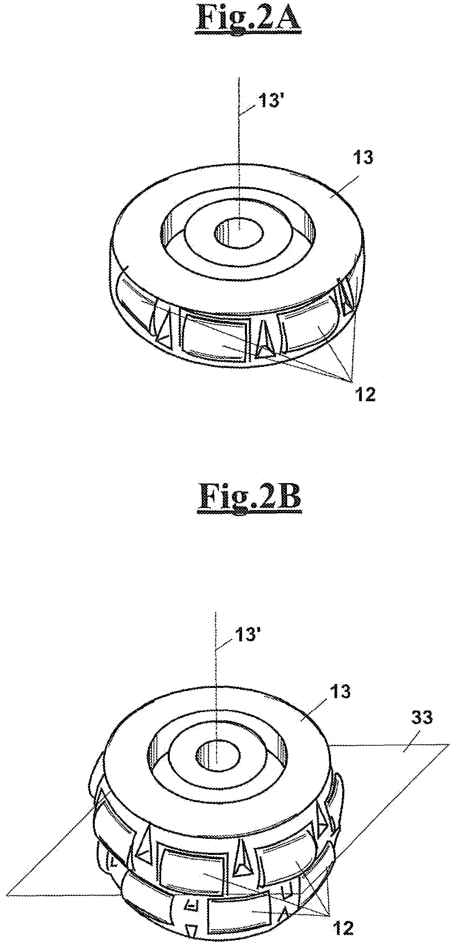

- Figs. 2 to and 2B show respectively a perspective view of two different exemplary embodiments of sliding means provided at each wheel;

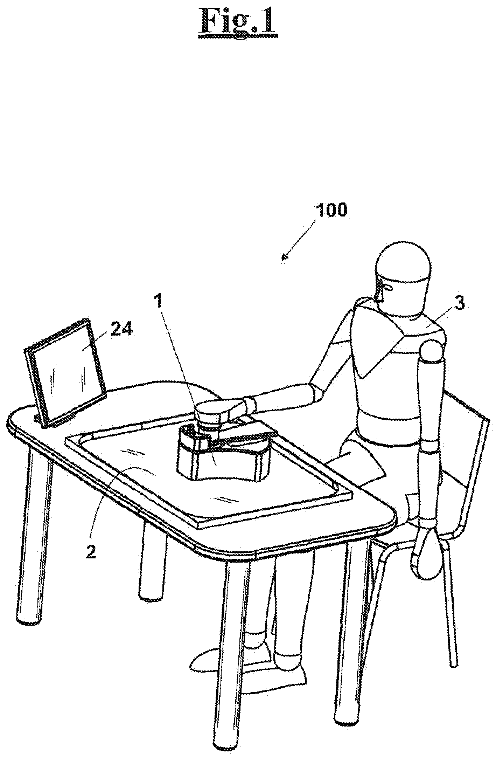

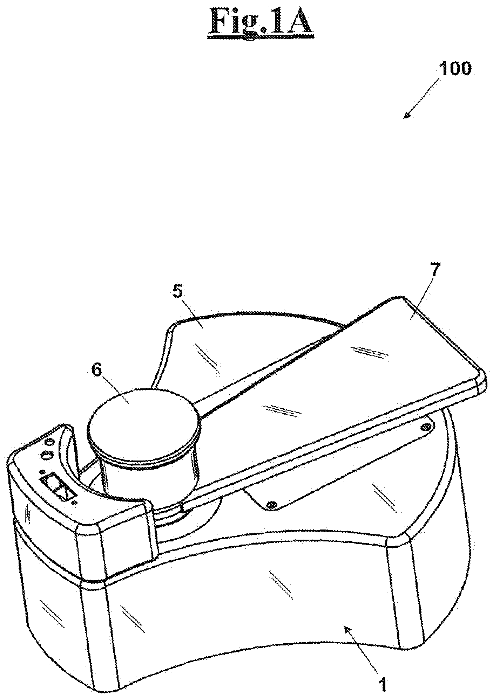

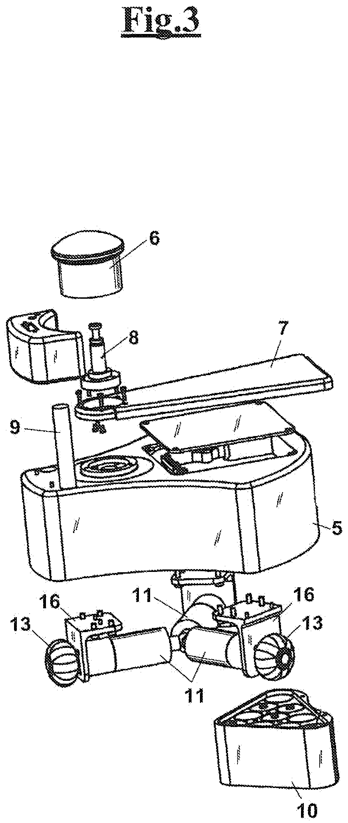

- Fig. 3 shows an exploded view of the mobile unit of Fig. 1A;

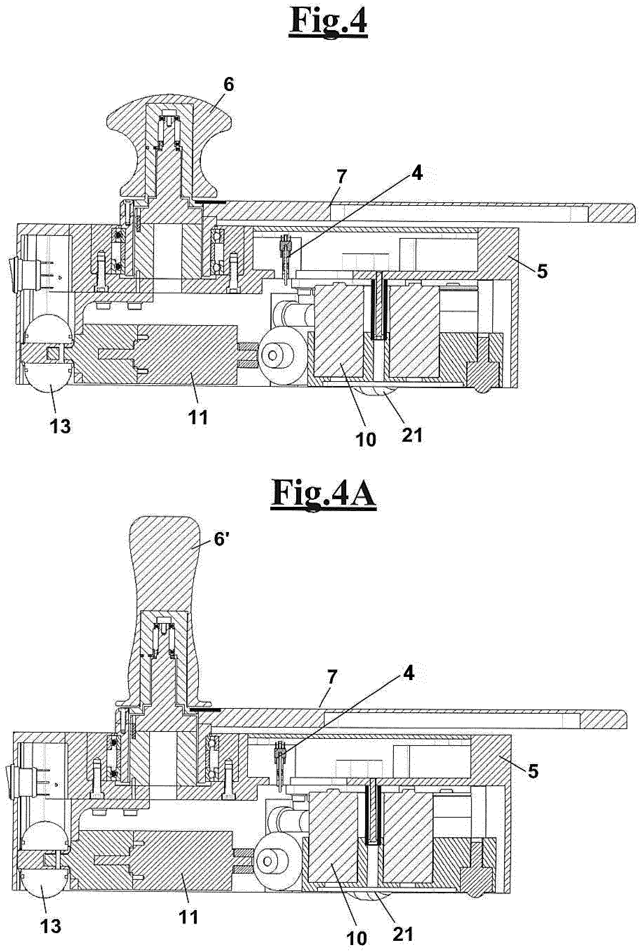

- Figs. 4 and 4A show respectively a cross sectional view of the mobile unit, depicting the motor units, the battery supply unit and a load cell;

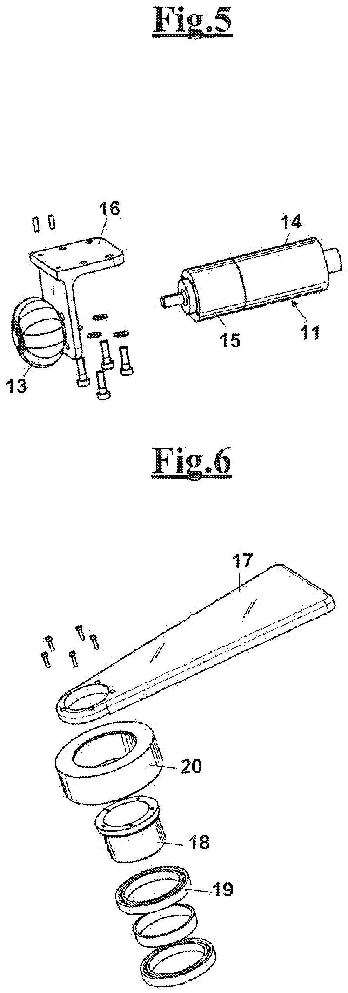

- Fig. 5 shows an exploded view of one of the motor units arranged to operate a respective wheel;
- Fig. 6 shows an exploded view of the rotation of the support for the user's arm mounted to the mobile unit;

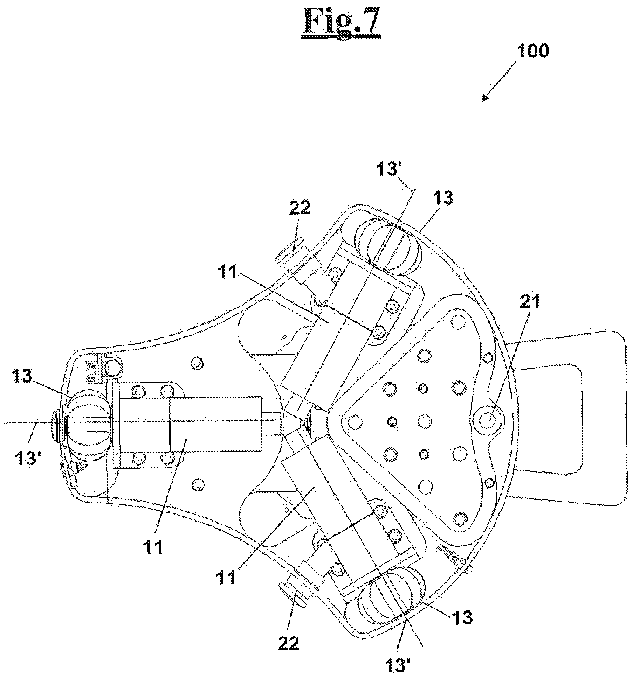

- Fig. 7 shows a bottom plan view of the mobile unit that implements an antitilting ball and further safety supports arranged symmetrically on the side walls of the carter;

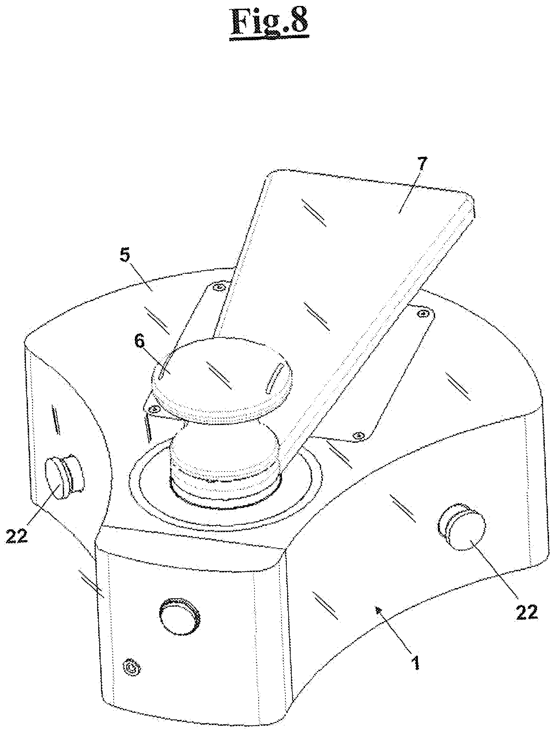

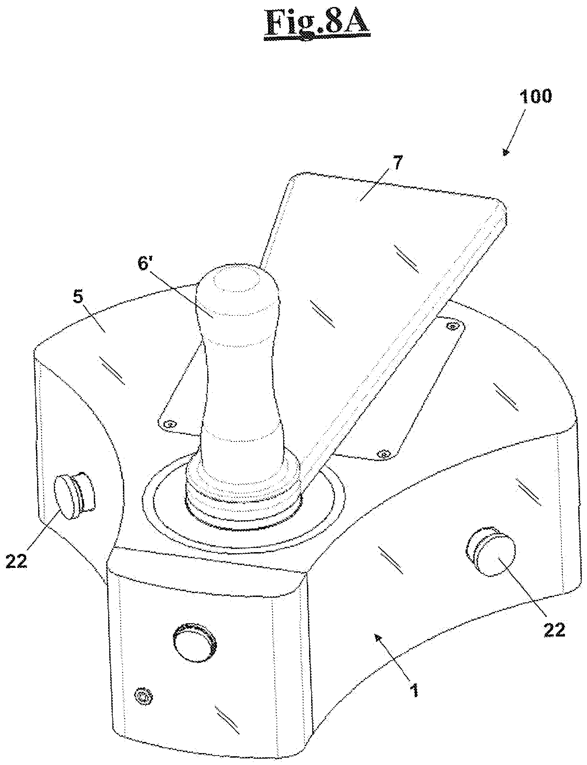

- Fig. 8 and Fig. 8A show two types of gripping knobs of designed for satisfy the needs of the users;

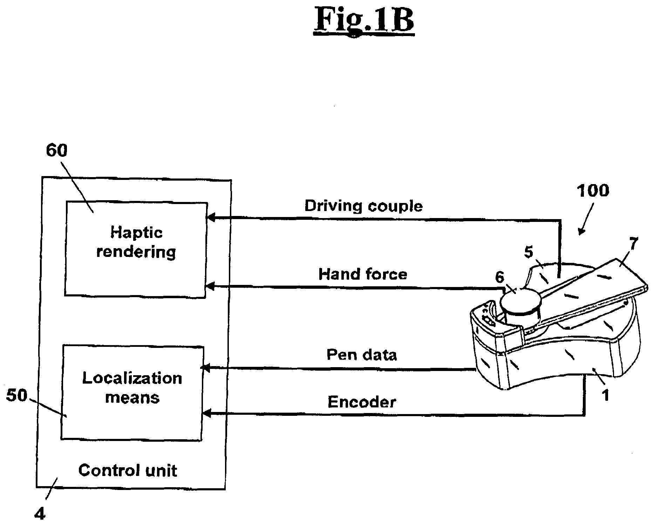

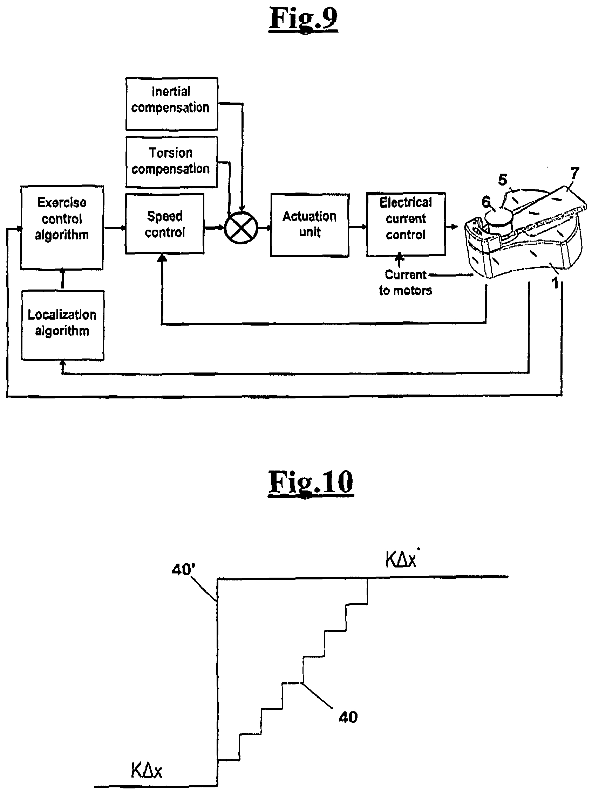

- Fig. 9 shows a diagrammatical view in detail of the control system of Fig. 1B;
- Fig. 10 highlights the substantial difference between the classic Kalman position estimation algorithm and the new method implemented in the control system of the mobile unit.

### Description of preferred exemplary embodiments

With reference, to Fig. 1, a haptic device 100 configured to be used as a man-machine interface for interactions in virtual and/or real places, tele-operation and rehabilitation assisted by robot, comprises a mobile unit 1 configured to be interfaced with at least one user 3, a control unit 4 (Fig.1B) associated with the mobile unit 1 and a feeding unit 10 (Fig.2) arranged to feed the mobile unit 1.

In particular, the mobile unit 1 is, furthermore, associated with a display means 24 arranged to provide an audio-visual feedback for user 3, so that user 3 can follow a predetermined path on the display.

More in particular, the device belongs to a haptic system that comprises haptic device 100 that is arranged to move autonomously on a basement 2, interacting with user 3, which in turn has video-terminal 24 of the external simulation and control unit.

Fig. 1A shows in detail the main components of the mobile unit 1 that comprises a support carter 5, a handle 6, a rotating support structure for the wrist and the forearm 7, as described below.

Furthermore, as shown in the diagrammatical view of Fig. 1B, the haptic device 100 comprises a detection means 50 arranged to determine in real time the position of the mobile unit 1 in a workspace and to communicate with control unit 4, so that the mobile unit 1 can be moved following a predetermined path 60 for example displayed on display 24, as described below in detail.

From a structural viewpoint, as shown in Fig. 2, mobile unit 1 comprises at least three wheels 13 rotationally spaced from each other; each wheel 13 comprises a rotation axis 13' and has an independent wheel motor unit 11, such that each wheel motor unit 11 allows the rotation of each wheel 13 about the respective rotation axis 13' in a rotation plane 33 orthogonal to the rotation axis 13'. In Fig. 2 the wheels 13 are indicated diagrammatically without showing the translation means, which in two possible examples is shown in Figs. 2A and 2B.

In the embodiment of Fig. 2, the wheels 13 of the above described mobile unit 1 are rotationally spaced from each other at an angle of 120°, helping or assisting the movements of user 3 during its interaction activity, when such movements follow the predetermined exercise direction. Vice-versa, if user 3 tends to deviate from the direction provided in the current protocol of interaction, the mobile unit 1 produces forces or couples opposite to this predetermined direction, proportionally to the distance from the ideal trajectory and/or to the force of user 3.

As shown in Figs. 2A and 2B, each wheel 13 has a sliding means 12 in a direction transversal to the rotation plane 33 (shown only in fig. 2B) , such that the mobile unit 1 can follow any trajectory, for example comprising a plurality of rollers, for example cylindrical or barrel-like with axis parallel to the rotation plane 33 of the wheel 13.

In particular, the sliding means comprises a plurality of rollers 12 arranged adjacent to each other in a single row, as shown in Fig. 2A, which is not part of the present invention. This way, each wheel 13 can carry out an idle "leeway motion", substantially without friction, transversally to each wheel rotation plane by the resultant rolling direction applied by the respective motor units 11 to the other wheels 13.

In the case of three wheels 13 of the mobile unit 1, as shown above, if a first wheel it has not momentarily a rolling movement , by giving to the other two wheels 13 an identical rolling speed in the respective support rolling planes, a pure translation is obtained of the first wheel orthogonally to each wheel rotation plane i.e. parallel to its own rotation axis 13'. Giving instead different speeds to the other two wheels 13, it is possible to obtain a movement in a direction oblique with respect to the rotation plane of the first wheel. In this case, to avoid friction sliding, also the first wheel can roll, in a controlled way by a computer that adjusts the rolling speed of each wheel according to a predetermined trajectory.

Then, by controlling suitably the speed of the three or more wheels 13, and taking into account their free translational capability in a direction transversal to their rotation support plane, the mobile unit 1 can reach directly any point of the workspace with extreme facility.

In an application of rehabilitation assisted by robot, such a device enables the user to follow any trajectory on the basement, with a high improvement with respect to PI2006A000136, in which the two driven wheels enabled the device to effect circular trajectories whose minimum radius was proportional to the distance between the wheels same.

A further advantage of the invention, with respect to the prior art described in PI2006A000136, is that when the device has to follow any trajectory, a handle interface of the user cannot be rotated. Such solution is extremely comfortable for the user, which can grasp the handle without that it escapes owing to rotations about a vertical axis, or an axis orthogonal to the basement.

In the invention, as shown in Fig. 2B, each wheel 13 comprises two rows of rollers 12.

The two rows of rollers 12 are arranged on two parallel support planes and are shifted from each other. This way, the use of two shifted rows of rollers allows the interface device to be remarkably more comfortable, since the phenomenon of the chattering, i.e. of the vibrating due to the discontinuity when passing from a roller to the other, is remarkably low. If this phenomenon can be tolerated in a mobile robot, it would be problematic in case of haptic interfaces.

The haptic device 100 is adapted to be interfaced with the upper or lower limb of a user 3 at any distal/proximal level or also only with the hand or with the fingers through an appropriate interface means.

In possible embodiments, the interface means is selected from the group consisting of: at least one handle 6 stiff and/or flexible; at least one stiff or flexible glove; a bracelet or a belt, a pen, thimbles or any interface as above defined and capable of measuring up to three rotations. In the not limiting drawings, advantageously, the interface means is depicted as a handle 6.

This way, the mobile unit 1 is operated by an interface, in particular handle 6, that is gripped by user 3 that can optionally rest on the mobile unit 1 the wrist or the forearm.

This makes it possible to obtain a system without links, without tendons or belts and with wireless electric actuation, light and easily portable that makes it possible to obtain a continuous interaction and without kinematic singularity between user 3 and mobile unit 1 as well as a continuous monitoring amount of the interaction same versus the couples, forces, accelerations, speeds, positions and orientations, and all the physical quantities from them derivable. Furthermore, if provided by the rehabilitation program, any trajectory can be followed even with very narrow radius of curvature, tending to zero, without that there is the need of rotating handle 6.

The detection means is selected from the group consisting of means for measuring the absolute position by triangulation with optical method, means for measuring the absolute position by triangulation with acoustic method or means for measuring the absolute position by triangulation with radiofrequency method or even means for measuring the absolute position with wired potentiometers or encoders.

In addition, the mobile unit 1 comprises a sensor means for detecting forces or couples applied by user 3 that, in particular, can be sensors selected from the group consisting of: strain gauges with adjustable resistance, of metal or semiconductor type, load cells, means for measuring the induced deformation, with optical method, magnetic or acoustic, or even by a means that computes the couple by sensing the current adsorbed by the motors.

Finally, the device can be of passive type adapted only to measure the dynamic variables, such as forces, couples, and inertial quantities, or kinematical variables, such as position, speed, accelerations, jerk, and variables derived from them, during its interfacing steps with user 3.

Fig. 3 shows an exploded view of the mobile unit 1 in which the carter 5 and handle 6 are shown that contain a load cell 8. Furthermore, a support 7 is shown for the wrist and the forearm, and an optical sensor 9 for reading the absolute position with respect to the basement, the supply batteries 10 and the three motor units 11.

Structurally, the mobile unit 1 is made of two overlapped portions free of rotating with respect to each other, in such a way that the upper portion remains always in an orientation most comfortable for user 3. In particular, the upper portion represents the support 7 and is adapted to provide to user 3 a comfortable support to the wrist and/or the forearm. The relative rotation of the two portions of the mobile unit 1 can, if necessary, be detected by a suitable sensor.

In particular, mobile unit 1 comprises a means for causing said motor units 11 to provide predetermined braking couples so that they are felt by user 3 as a feedback haptic force, in particular said means for causing is programmed for providing forces and couples responsive to the position of the mobile unit 1 in the support plane and responsive to the force applied by user 3 so that it can follow, by the instrument, predetermined trajectories.

In other words, owing to the combination of forces and couples acting according to the position of the mobile unit 1 in the support plane and responsive to the force applied by user 3, by the instrument, user 3 can follow the trajectories proposed like if he/she was pushing mobile unit 1 as if this were a ball that rolls in a channel of cylindrical cross section.

The radius of curvature of the channel (i.e. the slope of the walls) and the weight of the ball are the parameters that cause the difficulty of the operation. According to the chosen control, another effect is that user 3 can detect, and preferably see on the video, a movement like a virtual labyrinth which was programmed in the protocol of interaction, where the blocked directions consist of the walls whose stiffness/yieldability can be for changed.

Furthermore, with a kind of slope effect that simulates a rise/descent, the travel direction can be assisted or kept more difficult: For example, this slope effect can be used for accompanying user 3 in case of orthopaedic therapies or muscle exercise or for showing an admitted direction, but not advisable.

In particular, with reference to the diagrammatical view of Fig. 1B, the forces applied by user 3 are instant-by-instant recorded, in intensity and direction, by a special sensor of couple/force 8 located in handle 6 and correlated with the current position of the mobile unit 1. The position and the orientation of the mobile unit 1 in the basement is measured by a suitable navigation system 30 on board of mobile unit 1. Such navigation system corrects the estimation of the measuring systems mounted to the motor units 11. Such correction it is necessary in case of sliding the wheels 13 or to avoid that the device is moved to a known position for in order to make the zero reference.

The sensorial redundancy used for correcting the error when estimating the position of the mobile unit 1, even if already known in the of robotics, is implemented in a new way in the haptic interface according to the invention.

By a simple comparison of positions, the error can be detected and the control can reach an estimated position, obtaining sharply a position indicated by an algorithm of optimization, for example a localization using a Kalman filter transmitting a "beat" to the user's arm. In a preferred embodiment of the haptic however, the interface according to the invention can add more comfort for user 3. This is possible by an algorithm 60 (Fig.1B) that, even if ensuring a position tracking, ensures also a more regular feedback force, i.e. without impulsive forces for user 3, and unaffected by errors in the estimation of the position of the device. In substance, the estimation algorithm 60 used by the device mixes suitably two types of data, according to an optimization that takes into account not only the precision of the position tracking, but also of the derivative of the force feedback on user 3.

Fig. 4 shows a cross sectional view in which the carter 5 and handle 6 that contains the load cell 8 are shown again. Furthermore, the structure of the rotating support for the wrist and the forearm 7 and its mounting on the bearings, as well as the battery packs 10 and the motor units 11 are shown. In the recess obtained in the carter 5 part of the electronics and control unit 4 is depicted for which said recess has been reserved. Finally, an antitilting ball 21 is shown located close to the battery packs 10 to limit the risks of tilting due to critical positions of the user's arm on the relative support.

Fig. 5 shows an exploded view of the motor 11 that consists of a DC motor 14 and a reduction gear 15. A support bracket 16 connects motor 11 to carter 5; on the axis of reduction gear 15 a wheel 13 of transwheel type is mounted, with antitilting function.

Fig. 6 shows a possible embodiment of the invention where the above cited high mobility is assisted by the rotating support structure for the wrist and the forearm 7, capable of rotating freely; it comprises the support member 17 mounted to hollow shaft 18, which is mounted in ball bearings 19 that engage the support 20. In hollow shaft 18 a load cell 8 is mounted.

In Fig. 7 a possible exemplary embodiment is shown of the haptic device 100 that comprises an anti-tilting ball 21 inserted in the most peripheral zones of the device, in particular in the zone at the feeding unit 10. This way, anti-tilting the ball 21 limits further possible risks of tilting caused by a critical position of the arm of the patient on the relative support.

In addition, in a way not shown, it is possible to arrange passive rollers or balls or passive pivoting wheels along the wheel boundary of the instrument, in order to enlarge its support polygon, and in order to reduce the risks of tilting caused by a critical position of the arm of the patient on the relative support.

Furthermore, as shown in Figs. 7 and 8, two safety and support elements 22 can be provided located symmetrically on the concave surfaces of the support carter 5, for turning off directly the mobile unit 1 in case of danger for user 3 that can be operated by the user same or by an assistant at a position close to user 3.

Advantageously, on the front part a button 23 is provided for turning on the mobile unit 1.

In figures 8 and 8A two possible types of knob 6 and 6' are shown that ensure to the users an optimal grip of the handle of the mobile unit 1. In particular, in Fig. 8 the knob 6 is shown that has two slits that are symmetrical and longitudinal to the axis of the user's arm 3, that allow the movement of suitable buckles capable of blocking the hand of user 3, limiting a possible sliding of the same for persons with high difficulty of gripping and low mobility of the fingers of the hand.

Fig. 9 shows a possible scheme for controlling the device. In particular, the control unit 4 comprises a program means that is arranged to track the position of the mobile unit 1 using a specific algorithm of Kalman filter and to provide the force feedback to the user's handle according to the device for moving from the actual position of destination. In detail, Fig. 9 highlights the relations among the principal components: absolute position data and odometric data are used, in order to solve the problem of the detection of position of the device; then, according to the estimated position of the robot, the force of the user and the displacement from a desired position, the motor couples are provided to the actuation system.

In particular, the control system underlines the relation between all the components involved in the generation of the couples to wheels 13. The control system is based on different nested cycles. It is mainly comprised of three closed feedback rings and by two open rings that take into account the compensations, the compensation of force and the compensation of inertia, i.e. torsion;

Fig. 10 shows the step of recovering the error of position estimation. After the step of correction, the position estimated with the classic method 40 has a sharp change; this step depends on the measuring precision and on the uncertainty accumulated during the step of prediction, according to its duration and to the odometry precision. With the control proposed defined by curve 42 the change is recovered gradually for the successive steps.

The above described device can be used singularly or in combination with further haptic devices. In particular, several haptic devices can be provided for each joint and/or on different limbs, or even for more users.

Advantageously, the haptic device can be integrated with a further haptic device both of tactile type, in order to improve the device in order to return to user 3 also tactile sensations, and of kinesthetic type, in order to integrate the device for returning further force feedback on other articulations.

In particular, the haptic device further comprising audio-visual systems to use as comprising further for example in the evaluation cognitive or rehabilitation of subject affected by diseases neuro-psychiatric or neurological degenerative.

In particular, the haptic device allows an integration with sensors capable of measuring physical quantities of biometric type, for example a heart rate monitor, a sensor of body humidity, an oximeter, etc.

## Claims

1. A haptic device (100) configured to be used as man-machine interface for interactions in virtual and/or real places, tele-operation and rehabilitation assisted by robot, comprising:
- a mobile unit (1) configured to be interfaced with at least one user (3);
- a control unit (4) associated with said mobile unit (1);
- a feeding unit (10) arranged to feed said mobile unit (1);
- a detection means (30) arranged to determine in real time the position of said mobile unit (1) in a workspace and to communicate with said control unit (4) so that said mobile unit (1) can be moved following a predetermined path;
wherein said mobile unit (1) comprises:
- at least three wheels (13) rotationally spaced from each other;
wherein each of said wheels (13) comprises a rotation axis (13') and a wheel motor unit (11),
- a means for operating each motor unit (11) of said wheels (13), in order to cause the rotation of each wheel (13) about the respective rotation axis (13') in a rotation plane orthogonal to said rotation axis (13');
wherein each wheel (13) has, furthermore, a sliding means comprising a plurality of rollers (12) arranged adjacent to each other and arranged to allow a free movement of said wheels (13) in a direction transversal to said rotation support plane, such that said mobile unit (1) can follow any trajectory according to a combination of the rotation movement imposed to each wheel by said wheel motor unit (11) and of a free movement in a direction transversal to said rotation plane allowed by said rollers (12);
wherein said mobile unit (1) is configured to move on a basement (2) having a predetermined area,
wherein said haptic device is configured to be interfaced with the upper or lower limb of said user (3) at any distal/proximal level or also only with the hand or with the fingers through an interface means, said interface means selected from the group consisting of:
- at least one stiff and/or flexible handle;
- at least one stiff or flexible glove;
- a bracelet or a belt
- a pen;
- finger end effectors,
wherein said mobile unit (1) comprises a sensor means for detecting forces or couples (8) applied by said user (3) by said interface means; and
wherein said detection means (30) is selected from the group consisting of:
- a means for measuring the absolute position by optically reading a two-dimensional code drawn on said basement (2),
- a means for measuring the absolute position, by triangulation with optical method;
- a means for measuring the absolute position, by triangulation with acoustic method;
- a means for measuring the absolute position, by triangulation with radiofrequency method;
a means for measuring the absolute position with wired potentiometers or encoders;
**characterised in that** each wheel (13) comprises two rows of said rollers (12) arranged on two parallel support planes and shifted from each other.

2. The haptic device, according to claim 1, wherein said rollers (12) of said sliding means are selected from the group consisting of: cylindrical or barrel-like roller bearings.

3. The haptic device, according to claim 1, wherein said means for measuring the absolute position comprises an optical sensor (9) integral to said mobile unit (1) for reading an absolute position with respect to said basement (2).

4. The haptic device, according to claim 1, wherein said sensor means for detecting the forces or couples is selected from the group consisting of:
- strain gauges with adjustable resistance, of metal or semiconductor type
- load cells;
- a means for measuring the induced deformation, of optical or magnetic or acoustic type;
- a means that compute the couple by sensing the current adsorbed by the motors.

5. The haptic device, according to claim 1, wherein said mobile unit (1) comprises a means for causing said wheel motor units (11) to provide predetermined braking couples so that they are felt by a user (3) as a feedback haptic force.

6. The haptic device, according to claim 5, wherein said means for causing is programmed for providing forces and couples responsive to the position of the mobile unit (1) in the support plane and responsive to the force applied by the user (3) such that it can follow, by the device, predetermined trajectories.

7. The haptic device, according to claim 1, wherein next to said interface means (6), which are arranged to be held by the user (3), a support frame (7) of the wrist or forearm is provided.

8. The haptic device, according to claim 1, wherein said mobile unit (1) is made of two overlapped portions free of rotating with respect to each other, in such a way that the upper portion, comprising said interface means, remains always in an orientation most comfortable for the user (3).

9. The haptic device, according to claim 7, wherein a means is provided for measuring the relative rotation of said two portions of the mobile unit (1).

10. The haptic device, according to claim 7, wherein a means is provided for measuring the forces applied by the user (3) comprising a sensor of couple/force (8) located in said interface means (6).

11. The haptic device, according to claim 1, wherein a tilting preventing ball (21) is provided located in said mobile unit (1) to limit the risks of tilting due to critical positions of the arm on the relative support,
in particular passive rollers or balls are provided or passive pivoting wheels along the wheel boundary, in order to enlarge polygonal support of said mobile unit (1).

12. The haptic device, according to claim 1, wherein said mobile unit (1) comprises two safety and support elements (22) located symmetrically with respect to a support carter (5) of said mobile unit (1), arranged for allowing a direct electric block of the mobile unit (1) in case of danger for the user (3) that can be operated by the user (3) same or from whom operates in a position close to the user (3).

13. The haptic device, according to claim 1, wherein said interface means comprises a knob (6') that has two slits symmetrical and longitudinal to the axis of the user's arm (3) that allow the movement of suitable buckles capable of blocking the hand of the user (3), limiting a possible sliding of the same in case of patients with high gripping difficulty and low mobility of the fingers of the hand.

14. The haptic device, according to claim 1, wherein said control unit (4) comprises a program means that is arranged to track the position of said mobile unit (1) using a specific algorithm with Kalman filter and to provide a force feedback to the user's handle (3) according to the device for movement from the actual position of destination.

15. A haptic system comprising a haptic device according to any of the previous claims and a basement (2) arranged to define a working area on which said haptic device can move.

## Patentansprüche

1. Haptische Vorrichtung (100), die konfiguriert ist, um als Mensch-Maschine-Schnittstelle für Interaktionen an virtuellen und/oder realen Orten, Teleoperation und Rehabilitation unterstützt durch Roboter verwendet zu werden, umfassend:
- eine mobile Einheit (1), die konfiguriert ist, um mit zumindest einem Benutzer (3) verbunden zu werden;
- eine Steuereinheit (4), die mit der mobilen Einheit (1) assoziiert ist;
- eine Speiseeinheit (10), die angeordnet ist, um die mobile Einheit (1) zu speisen;
- ein Detektionsmittel (30), das angeordnet ist, um in Echtzeit die Position der mobilen Einheit (1) in einem Arbeitsbereich zu bestimmen und um mit der Steuereinheit (4) zu kommunizieren, sodass die mobile Einheit (1) einem vorbestimmten Weg folgend bewegt werden kann;
wobei die mobile Einheit (1) Folgendes umfasst:
- zumindest drei Räder (13), die rotatorisch voneinander beabstandet sind;
wobei jedes der Räder (13) eine Rotationsachse (13') und eine Radmotoreinheit (11) umfasst,
- ein Mittel zum Betreiben jeder Motoreinheit (11) der Räder (13), um die Rotation jedes Rads (13) um die jeweilige Rotationsachse (13') in einer Rotationsebene orthogonal zu der Rotationsachse (13') zu bewirken;
wobei jedes Rad (13) ferner noch ein Gleitmittel aufweist, das eine Vielzahl von Rollen (12) umfasst, die benachbart zueinander angeordnet und angeordnet sind, um eine freie Bewegung der Räder (13) in einer Richtung quer zu der Rotationsstützebene zu ermöglichen, sodass die mobile Einheit (1) einer beliebigen Trajektorie gemäß einer Kombination der Rotationsbewegung folgen kann, die jedem Rad durch die Radmotoreinheit (11) auferlegt wird, und einer freien Bewegung in einer Richtung quer zu der Rotationsebene, die durch die Rollen (12) ermöglicht wird;
wobei die mobile Einheit (1) konfiguriert ist, um sich auf einer Basis (2) mit einer vorbestimmten Fläche zu bewegen,
wobei die haptische Vorrichtung konfiguriert ist, um mit dem oberen oder unteren Glied des Benutzers (3) auf einem beliebigen distalen/proximalen Niveau oder auch nur mit der Hand oder mit den Fingern durch ein Schnittstellenmittel verbunden zu sein, wobei das Schnittstellenmittel ausgewählt ist aus der Gruppe bestehend aus:
- zumindest einem steifen und/oder flexiblen Griff;
- zumindest einem steifen oder flexiblen Handschuh;
- einem Armband oder einem Gürtel
- einem Stift;
- Fingerendeffektoren,
wobei die mobile Einheit (1) ein Sensormittel zum Detektieren von Kräften oder Kopplungen (8) umfasst, die durch den Benutzer (3) durch das Schnittstellenmittel ausgeübt werden; und
wobei das Detektionsmittel (30) ausgewählt ist aus der Gruppe bestehend aus:
- einem Mittel zum Messen der absoluten Position durch optisches Lesen eines zweidimensionalen Codes, der auf der Basis (2) gezeichnet ist,
- einem Mittel zum Messen der absoluten Position durch Triangulation mit optischem Verfahren;
- einem Mittel zum Messen der absoluten Position durch Triangulation mit akustischem Verfahren;
- einem Mittel zum Messen der absoluten Position durch Triangulation mit Hochfrequenzverfahren;
einem Mittel zum Messen der absoluten Position mit verdrahteten Potentiometern oder Encodern;
**dadurch gekennzeichnet, dass** jedes Rad (13) zwei Reihen der Rollen (12) umfasst, die auf zwei parallelen Stützebenen angeordnet und voneinander versetzt sind.

2. Haptische Vorrichtung nach Anspruch 1, wobei die Rollen (12) des Gleitmittels ausgewählt sind aus der Gruppe bestehend aus: zylindrischen oder tonnenartigen Rollenlagern.

3. Haptische Vorrichtung nach Anspruch 1, wobei das Mittel zum Messen der absoluten Position ein optischer Sensor (9) einstückig mit der mobilen Einheit (1) zum Lesen einer absoluten Position in Bezug auf die Basis (2) umfasst.

4. Haptische Vorrichtung nach Anspruch 1, wobei das Sensormittel zum Detektieren der Kräfte oder Kopplungen ausgewählt ist aus der Gruppe bestehend aus:
- Dehnungsmessern mit einstellbarem Widerstand vom Metall- oder Halbleitertyp
- Lastzellen;
- einem Mittel zum Messen der induzierten Verformung vom optischen oder magnetischen oder akustischen Typ;
- einem Mittel, welches die Kopplung durch Erfassen des Stroms, der durch die Motoren adsorbiert wird, berechnet.

5. Haptische Vorrichtung nach Anspruch 1, wobei die mobile Einheit (1) ein Mittel zum Bewirken umfasst, dass die Radmotoreinheiten (11) vorbestimmte Bremskopplungen bereitstellen, sodass sie durch einen Benutzer (3) als eine haptische Rückkopplungskraft gefühlt werden.

6. Haptische Vorrichtung nach Anspruch 5, wobei das Mittel zum Bewirken zum Bereitstellen von Kräften und Kopplungen als Reaktion auf die Position der mobilen Einheit (1) in der Stützebene und als Reaktion auf die Kraft, die durch den Benutzer (3) ausgeübt wird, programmiert ist, sodass es durch die Vorrichtung vorbestimmten Trajektorien folgen kann.

7. Haptische Vorrichtung nach Anspruch 1, wobei neben den Schnittstellenmitteln (6), die angeordnet sind, um durch den Benutzer (3) gehalten zu werden, ein Stützrahmen (7) des Handgelenks oder Unterarms bereitgestellt ist.

8. Haptische Vorrichtung nach Anspruch 1, wobei die mobile Einheit (1) aus zwei überlappenden Abschnitten hergestellt ist, die frei von Rotation in Bezug zueinander sind, auf eine solche Weise, dass der obere Abschnitt, der das Schnittstellenmittel umfasst, immer in einer Ausrichtung bleibt, die am bequemsten für den Benutzer (3) ist.

9. Haptische Vorrichtung nach Anspruch 7, wobei ein Mittel zum Messen der relativen Rotation der zwei Abschnitte der mobilen Einheit (1) bereitgestellt ist.

10. Haptische Vorrichtung nach Anspruch 7, wobei ein Mittel zum Messen der Kräfte, die durch den Benutzer (3) ausgeübt werden, bereitgestellt ist, das einen Sensor für Kopplung/Kraft (8) umfasst, der sich in dem Schnittstellenmittel (6) befindet.

11. Haptische Vorrichtung nach Anspruch 1, wobei eine Kippverhinderungskugel (21) bereitgestellt ist, die sich in der mobilen Einheit (1) befindet, um die Risiken von Kippen aufgrund von kritischen Positionen des Arms auf der relativen Stütze zu begrenzen,
insbesondere passive Rollen oder Kugeln bereitgestellt sind oder passive Schwenkräder entlang der Radbegrenzung, um polygonale Stütze der mobilen Einheit (1) zu vergrößern.

12. Haptische Vorrichtung nach Anspruch 1, wobei die mobile Einheit (1) zwei Sicherheits- und Stützelemente (22) umfasst, die sich symmetrisch in Bezug auf einen Stützwagen (5) der mobilen Einheit (1) befinden, die angeordnet sind, um einen direkten elektrischen Block der mobilen Einheit (1) im Falle von Gefahr für den Benutzer (3) zu ermöglichen, der durch denselben Benutzer (3) bedient werden kann oder von dem aus er in einer Position nahe dem Benutzer (3) bedient wird.

13. Haptische Vorrichtung nach Anspruch 1, wobei das Schnittstellenmittel einen Knopf (6') umfasst, der zwei Schlitze symmetrisch und längs zu der Achse des Arms des Benutzers (3) aufweist, welche die Bewegung von geeigneten Schnallen ermöglichen, die in der Lage sind, die Hand des Benutzers (3) zu blockieren, wodurch ein mögliches Gleiten derselben im Falle von Patienten mit hoher Greifschwierigkeit und geringer Beweglichkeit der Finger der Hand begrenzt wird.

14. Haptische Vorrichtung nach Anspruch 1, wobei die Steuereinheit (4) ein Programmmittel umfasst, das angeordnet ist, um die Position der mobilen Einheit (1) unter Verwendung eines spezifischen Algorithmus mit Kalman-Filter zu verfolgen und um eine Kraftrückmeldung an den Griff des Benutzers (3) gemäß der Vorrichtung für Bewegung von der tatsächlichen Zielposition bereitzustellen.

15. Haptisches System, umfassend eine haptische Vorrichtung nach einem der vorhergehenden Ansprüche und eine Basis (2), die angeordnet ist, um eine Arbeitsfläche zu definieren, auf der sich die haptische Vorrichtung bewegen kann.

## Revendications

1. Dispositif tactile (100) conçu pour être utilisé en tant qu'interface homme-machine pour des interactions dans des lieux virtuels et/ou réels, une télé-opération et une réhabilitation assistés par un robot, comprenant:
- une unité mobile (1) conçue pour être interfacée avec au moins un utilisateur (3) ;
- une unité de commande (4) associée à ladite unité mobile (1) ;
- une unité d'alimentation (10) agencée pour alimenter ladite unité mobile (1) ;
- un moyen de détection (30) agencé pour déterminer en temps réel la position de ladite unité mobile (1) dans un espace de travail et pour communiquer avec ladite unité de commande (4) afin que ladite unité mobile (1) puisse être déplacée suivant un trajet prédéterminé ;
dans lequel ladite unité mobile (1) comprend:
- au moins trois roues (13) espacées en rotation les unes des autres ;
dans lequel chacune desdites roues (13) comprend un axe de rotation (13') et une unité de moteur de roue (11),
- un moyen pour opérer chaque unité de moteur (11) desdites roues (13), afin de provoquer la rotation de chaque roue (13) autour de l'axe de rotation respectif (13') dans un plan de rotation orthogonal audit axe de rotation (13') ;
dans lequel chaque roue (13) présente, en outre, un moyen de coulissement comprenant une pluralité de rouleaux (12) agencés les uns à côté des autres et agencés pour permettre un mouvement libre desdites roues (13) dans une direction transversale audit plan de support de rotation, de sorte que ladite unité mobile (1) peut suivre n'importe quelle trajectoire selon une combinaison du mouvement de rotation imposé à chaque roue par ladite unité de moteur de roue (11) et d'un mouvement libre dans une direction transversale audit plan de rotation permis par lesdits rouleaux (12) ;
dans lequel ladite unité mobile (1) est conçue pour se déplacer sur une base (2) présentant une surface prédéterminée,
dans lequel ledit dispositif tactile est conçu pour être interfacé avec le membre supérieur ou inférieur dudit utilisateur (3) à tout niveau distal/proximal, ou également uniquement avec la main ou avec les doigts par l'intermédiaire d'un moyen d'interface, ledit moyen d'interface étant choisi dans le groupe constitué par:
- au moins une poignée rigide et/ou flexible ;
- au moins un gant rigide ou flexible ;
- un bracelet ou une ceinture ;
- un stylo ;
- des effecteurs de bout de doigt,
dans lequel ladite unité mobile (1) comprend un moyen de capteur pour détecter des forces ou des couples (8) appliqués par ledit utilisateur (3) par ledit moyen d'interface ; et
dans lequel ledit moyen de détection (30) est choisi dans le groupe constitué par:
- un moyen pour mesurer la position absolue par lecture optique d'un code bidimensionnel dessiné sur ladite base (2),
- un moyen pour mesurer la position absolue par triangulation avec procédé optique ;
- un moyen pour mesurer la position absolue par triangulation avec procédé acoustique ;
- un moyen pour mesurer la position absolue par triangulation avec procédé radiofréquence ;
un moyen pour mesurer la position absolue avec des potentiomètres ou des codeurs câblés ;
**caractérisé en ce que** chaque roue (13) comprend deux rangées desdits rouleaux (12) agencées sur deux plans de support parallèles et décalées l'une de l'autre.

2. Dispositif tactile, selon la revendication 1, dans lequel lesdits rouleaux (12) dudit moyen de coulissement sont choisis dans le groupe constitué par: des roulements à rouleaux cylindriques ou en forme de tonneau.

3. Dispositif tactile, selon la revendication 1, dans lequel lesdits moyens pour mesurer la position absolue comprennent un capteur optique (9) intégré à ladite unité mobile (1) pour lire une position absolue par rapport à ladite base (2).

4. Dispositif tactile, selon la revendication 1, dans lequel ledit moyen de capteur pour détecter les forces ou les couples est choisi dans le groupe constitué par:
- des jauges de contrainte à résistance réglable, de type métal ou semi-conducteur ;
- des cellules de charge ;
- un moyen pour mesurer la déformation induite, de type optique ou magnétique ou acoustique ;
- un moyen qui calcule le couple en captant le courant absorbé par les moteurs.

5. Dispositif tactile, selon la revendication 1, dans lequel ladite unité mobile (1) comprend un moyen pour amener lesdites unités de moteur de roue (11) à fournir des couples de freinage prédéterminés afin qu'ils soient ressentis par un utilisateur (3) comme une force tactile de rétroaction.

6. Dispositif tactile, selon la revendication 5, dans lequel ledit moyen pour amener est programmé pour fournir des forces et des couples en réponse à la position de l'unité mobile (1) dans le plan de support et en réponse à la force appliquée par l'utilisateur (3) de sorte qu'il peut suivre, par le dispositif, des trajectoires prédéterminées.

7. Dispositif tactile, selon la revendication 1, dans lequel à côté dudit moyen d'interface (6), qui est agencé pour être tenu par l'utilisateur (3), un cadre de support (7) du poignet ou de l'avant-bras est prévu.

8. Dispositif tactile, selon la revendication 1, dans lequel ladite unité mobile (1) est constituée de deux parties chevauchantes libres de tourner l'une par rapport à l'autre, de manière à ce que la partie supérieure, comprenant ledit moyen d'interface, reste toujours dans une orientation la plus confortable pour l'utilisateur (3).

9. Dispositif tactile, selon la revendication 7, dans lequel un moyen est prévu pour mesurer la rotation relative desdites deux parties de l'unité mobile (1).

10. Dispositif tactile, selon la revendication 7, dans lequel un moyen est prévu pour mesurer les forces appliquées par l'utilisateur (3), comprenant un capteur de couple/force (8) situé dans ledit moyen d'interface (6).

11. Dispositif tactile, selon la revendication 1, dans lequel une bille (21) empêchant un basculement est prévue située dans ladite unité mobile (1) pour limiter les risques de basculement dus à des positions critiques du bras sur le support relatif,
en particulier, des rouleaux ou des billes passifs sont prévus, ou des roues pivotantes passives le long de la limite de roue, afin d'élargir le support polygonal de ladite unité mobile (1).

12. Dispositif tactile, selon la revendication 1, dans lequel ladite unité mobile (1) comprend deux éléments de sécurité et de support (22) situés symétriquement par rapport à un carter de support (5) de ladite unité mobile (1), agencés pour permettre un blocage électrique direct de l'unité mobile (1) en cas de danger pour l'utilisateur (3), qui peut être opéré par l'utilisateur (3) lui-même ou par quelqu'un opérant dans une position proche de l'utilisateur (3).

13. Dispositif tactile, selon la revendication 1, dans lequel ledit moyen d'interface comprend un pommeau (6') qui présente deux fentes symétriques et longitudinales par rapport à l'axe du bras de l'utilisateur (3) qui permettent le mouvement de boucles appropriées capables de bloquer la main de l'utilisateur (3), limitant un glissement possible de celle-ci dans le cas de patients avec une difficulté de préhension élevée et une faible mobilité des doigts de la main.

14. Dispositif tactile, selon la revendication 1, dans lequel ladite unité de commande (4) comprend un moyen de programme qui est agencé pour suivre la position de ladite unité mobile (1) à l'aide d'un algorithme spécifique avec un filtre de Kalman et pour fournir une rétroaction de force à la poignée de l'utilisateur (3) selon le dispositif pour un mouvement à partir de la position réelle de destination.

15. Système tactile comprenant un dispositif tactile selon l'une quelconque des revendications précédentes et une base (2) agencée pour définir une zone de travail sur laquelle ledit dispositif tactile peut se déplacer.
